# FASCICULE DE BREVET EUROPEEN

(11) **EP 2 144 261 B1**
(45) Date de publication et mention de la délivrance du brevet: **11.06.2014**
(21) Numéro de dépôt: 09164680.2
(22) Date de dépôt: 06.07.2009
(51) Int. Cl.: H01H 1/58

(54) **Dispositif de sectionnement pour séparer ou connecter deux parties d'un circuit électrique parmi lesquelles un transformateur de tension**
Absperrvorrichtung zum Trennen oder Verbinden von zwei Teilen eines elektrischen Schaltkreises, von denen einer ein Spannungstransformator ist
Cut-off device for separating or connecting two parts of an electric circuit, including a voltage transformer

(30) Priorité: 07.07.2008 FR 0854608
(43) Date de publication de la demande: 13.01.2010
(73) Titulaire: ALSTOM Technology Ltd, 5400 Baden (CH)
(72) Inventeur: Gimeno, Carmelo, 5004 Aarau (CH); Hiltbrunner, Hugo, 2824 Vicques (CH)
(74) Mandataire: Ilgart, Jean-Christophe

(56) Documents cités:
- EP-A- 1 610 352
- US-A1- 2002 043 515
- US-B1- 6 723 940

## Description

### DOMAINE TECHNIQUE

La présente invention concerne un dispositif de sectionnement pour séparer ou connecter deux parties d'un circuit électrique parmi lesquelles un transformateur de tension.

L'invention s'applique tout particulièrement au cas où le circuit électrique est une partie d'un poste électrique à isolation gazeuse (connu sous l'abréviation anglo-saxonne de GIS soit gas insulated substation) ou un poste électrique sous enveloppe métallique (PSEM) fonctionnant à moyenne ou haute tension. Le transformateur de tension est placé dans une enceinte étanche et fait partie du poste électrique.

Lorsque le dispositif de sectionnement est ouvert, le transformateur de tension est isolé électriquement du reste du poste et il est possible de faire des mesures sur le poste électrique sans endommager le transformateur.

Un poste électrique est une installation située à la jonction de lignes de transport et de distribution d'électricité, qui contient de l'appareillage de protection, de transformation et de sectionnement notamment, destiné à modifier certaines caractéristiques du réseau électrique auquel elle est reliée, en fonction des contraintes d'exploitation.

### ÉTAT DE LA TECHNIQUE ANTÉRIEURE

Il existe plusieurs dispositions connues pour connecter ou déconnecter un transformateur de tension placé dans une enceinte. Dans la demande de brevet EP 0 008 821, le transformateur est mobile en rotation ou en translation et ses éléments de connexion peuvent se déplacer en rotation ou en translation pour venir en contact ou non avec un contact électrique fixe relié au reste du poste électrique par l'intermédiaire d'un conducteur. Le déplacement du transformateur se fait à l'aide d'un élément déplaçable relié au transformateur. La configuration dans laquelle le transformateur est mobile en translation occupe un espace important. La configuration dans laquelle le transformateur est mobile en rotation ne peut assurer une bonne étanchéité à l'enceinte car on utilise un arbre creux qui émerge de l'enceinte pour entraîner en rotation le transformateur. De plus le fait d'entraîner en mouvement le transformateur nécessite une force importante.

Dans la demande de brevet japonais JP-2007-250597, un transformateur de tension triphasé est disposé de manière fixe dans une enceinte. Il possède des éléments de connexion haute tension fixes. Les éléments de connexion haute tension du transformateur peuvent venir en contact électrique avec des éléments de connexion reliés au reste du poste électrique, par l'intermédiaire de contacts mobiles portés par une couronne actionnable en rotation autour d'un axe central de l'enceinte, un contact mobile s'insérant entre un élément de connexion fixe du transformateur et un élément de connexion fixe relié au reste du poste électrique. L'actionnement de la couronne se fait grâce à une roue dentée dans laquelle la couronne est inscrite. Le mécanisme d'actionnement est complexe et coûteux. Il n'est pas possible de préassembler le dispositif de sectionnement avant son introduction dans l'enceinte et sa coopération avec le transformateur.

Dans la demande de brevet français FR-2 870 635 et EP-A-1610352, un transformateur comporte des éléments de connexion haute tension fixes reliés électriquement à des contacts mobiles par l'intermédiaire d'un tube conducteur flexible. Les contacts mobiles fixés sur un support diélectrique rigide peuvent venir en contact électrique avec des éléments de connexion fixes reliés au reste du poste électrique, lors de l'actionnement du support diélectrique rigide en translation dans l'axe des contacts mobiles. Des moyens de guidage du support diélectrique sont prévus et ils sont solidaires de l'enceinte. L'actionnement se fait hors tension. Dans cette configuration non plus, il n'est pas possible de préassembler le dispositif de sectionnement avant son introduction dans l'enceinte. Pour des applications à haute tension, le dispositif de sectionnement nécessite des tubes conducteurs flexibles de grand diamètre. Le dispositif de sectionnement est encombrant, car les tubes conducteurs flexibles ne doivent pas toucher les parois de l'enceinte.

La demande de brevet français FR-2 080 311 décrit un dispositif de sectionnement blindé à double coupure comportant deux éléments de connexion fixes et deux tiges de connexion mobiles pouvant se déplacer en translation dans un support métallique et venir en contact électrique avec un élément de connexion fixe lorsqu'elles se projettent partiellement hors du support métallique. Le déplacement des tiges de connexion se fait à l'aide d'un mécanisme d'entraînement qui est compliqué et couteux. Ce dispositif de sectionnement n'est pas intégré dans le transformateur, c'est alors un équipement encombrant et coûteux.

D'autres dispositifs de sectionnement sont connus des demandes de brevet DE 2414 200, EP 0 744 803, DE 198 50 430.

### EXPOSÉ DE L'INVENTION

La présente invention a justement comme but de proposer un dispositif de sectionnement qui ne présente pas les inconvénients mentionnés ci dessus.

Plus particulièrement, la présente invention a pour but de proposer un dispositif de sectionnement qui est compact, qui peut être préassemblé et fixé au transformateur de tension avant que celui-ci ne soit placé dans une enceinte étanche. De la sorte, on réduit l'encombrement du dispositif de sectionnement et donc de son coût. Lorsque le dispositif de sectionnement est en position fermée, le fait que ses pièces sous tension soient construites avec des éléments rigides et donc correctement positionnés, permet également de réduire l'encombrement mais aussi les risques d'amorçage entre les pièces sous tension du dispositif de sectionnement et les pièces hors tension environnantes.

Un autre but de l'invention est de proposer un dispositif de sectionnement qui est suffisamment simple et aisé à actionner pour être manoeuvré à main.

Pour atteindre ces buts, le dispositif de sectionnement comporte au moins une paire de contacts électriques dont un est fixe et l'autre mobile, reliés électriquement entre eux via un dispositif télescopique de guidage, la commande du dispositif télescopique de guidage permettant de mettre le dispositif de sectionnement en position ouverte ou en position fermée.

Plus précisément, la présente invention concerne un dispositif de sectionnement destiné à séparer ou à connecter électriquement deux parties d'un circuit électrique parmi lesquelles un transformateur de tension comportant des enroulements. Le dispositif de sectionnement est apte à prendre une position ouverte ou une position fermée. Il comporte au moins une paire de contacts électriques avec un contact mobile et un contact fixe devant être relié électriquement avec un enroulement du transformateur via un élément de connexion, quelle que soit la position du dispositif de sectionnement.

Il comporte, en outre, un dispositif télescopique de guidage par paire de contacts électriques, ayant une partie fixe solidaire du contact électrique fixe et une partie mobile coulissante par rapport à la partie fixe, portant le contact mobile, les contacts électriques de la paire étant reliés électriquement entre eux via le dispositif télescopique de guidage.

Il comporte en outre, un dispositif de commande accessible depuis l'extérieur de l'enceinte, pour maintenir le dispositif télescopique de guidage en extension afin que le contact mobile vienne en contact électrique avec un élément de connexion électrique de l'autre partie du circuit en position fermée et pour que le dispositif télescopique de guidage soit rétracté, interrompant le contact entre le contact mobile et l'élément de connexion, en position ouverte.

Il comporte en outre un dispositif de fixation. La paire de contacts électriques, le dispositif télescopique de guidage et le dispositif de commande forment un ensemble autoportant à fixer à l'aide du dispositif de fixation au transformateur. Le contact fixe construit autour d'un axe est monté de manière élastique axialement, de sorte à venir en butée élastique contre l'élément de connexion du transformateur après la fixation. Ainsi, aucun ajustage du contact fixe n'est requis après la fixation.

Le dispositif de fixation peut être solidaire de la partie fixe du dispositif télescopique de guidage.

Lorsqu'il y a plusieurs dispositifs télescopiques de guidage, leurs parties fixes sont avantageusement montées sur un support fixe commun diélectrique.

Le dispositif de fixation peut prendre appui sur le support fixe commun.

Pour assurer un bon guidage des parties mobiles coulissantes, ces dernières peuvent être montées sur un support mobile commun diélectrique.

Pour assurer une pression de contact optimale du côté du contact mobile, ce dernier peut être monté de manière élastique dans une direction de déplacement du contact mobile.

Lorsque les éléments de connexion des deux parties du circuit ne sont pas alignés avec le dispositif télescopique de guidage, on prévoit que le contact fixe soit monté à une extrémité d'une barrette de décalage électriquement conductrice, l'autre extrémité de la barrette de décalage conductrice étant fixée à la partie fixe du dispositif télescopique de guidage.

La barrette de décalage peut être bloquée en rotation par rapport à la partie fixe du dispositif télescopique de guidage.

La barrette de décalage peut être suffisamment élastique pour assurer ou contribuer à assurer le montage élastique.

En variante ou en combinaison, le contact fixe peut être équipé d'un ressort de compression.

Pour simplifier le dispositif de sectionnement, le dispositif de commande est couplé à un seul dispositif télescopique de guidage même lorsqu'il y a plusieurs dispositifs télescopiques de guidage.

Le dispositif de commande peut prendre la forme d'une tige de commande ayant une extrémité reliée de manière élastique à la partie mobile coulissante du dispositif télescopique de guidage.

La tige de commande peut être équipée à son autre extrémité d'une pièce de blocage en translation pour la bloquer en translation par rapport à une enceinte dans laquelle le transformateur est logé, lorsque le dispositif de sectionnement est en position fermée, la pièce de blocage étant inopérante et la tige étant débloquée en translation lorsque le dispositif de sectionnement est en position ouverte.

La tige de commande peut passer à travers le transformateur jusqu'à un couvercle de l'enceinte et être accessible de l'extérieur de l'enceinte lorsque le dispositif de sectionnement est fixé au transformateur logé dans l'enceinte.

Le dispositif de sectionnement peut être triphasé lorsqu'il est utilisé avec deux parties de circuit triphasé, il comporte alors trois paires de contacts électriques.

Avantageusement, le contact électrique mobile peut être configuré en chapeau de champignon avec une partie sommitale sensiblement plane, cette partie sommitale sensiblement plane étant sensiblement perpendiculaire à une direction de déplacement du contact électrique mobile.

La présente invention concerne également un transformateur de tension équipé d'un dispositif de sectionnement ainsi caractérisé. Ses enroulements sont montés sur un support et le dispositif de fixation est fixé au support.

L'élément de connexion a de préférence une surface sensiblement plane orientée sensiblement perpendiculairement à l'axe du contact fixe.

La présente invention concerne également un poste électrique à isolation gazeuse ou à enveloppe métallique comportant un transformateur de tension et au moins un dispositif de sectionnement ainsi
caractérisé, dans lequel l'autre partie du circuit est une partie autre du poste électrique.

De préférence, l'élément de connexion électrique de l'autre partie du circuit est configuré en chapeau de champignon avec une partie sommitale sensiblement plane, cette partie sensiblement plane étant sensiblement perpendiculaire à une direction de déplacement du contact électrique mobile du dispositif de sectionnement.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
Les figures 1A, 1B montrent un dispositif de sectionnement de l'invention monté sur un transformateur de tension respectivement en position fermée et ouverte ;
La figure 2 montre en trois dimensions le dispositif de sectionnement dont est équipé un transformateur de tension ;
La figure 3 montre des détails du dispositif télescopique de guidage du dispositif du dispositif de sectionnement de l'invention ;
La figure 4 montre en coupe le contact fixe du dispositif de sectionnement et sa liaison au dispositif télescopique de guidage ;
Les figures 5A, 5B, 5C montrent le dispositif de sectionnement préassemblé avant son montage, les parties mobiles coulissantes et les parties fixes de dispositifs télescopiques de guidage du dispositif de sectionnement de l'invention ;
Les figures 6A, 6B montrent le dispositif de commande en position libre et en position bloquée.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

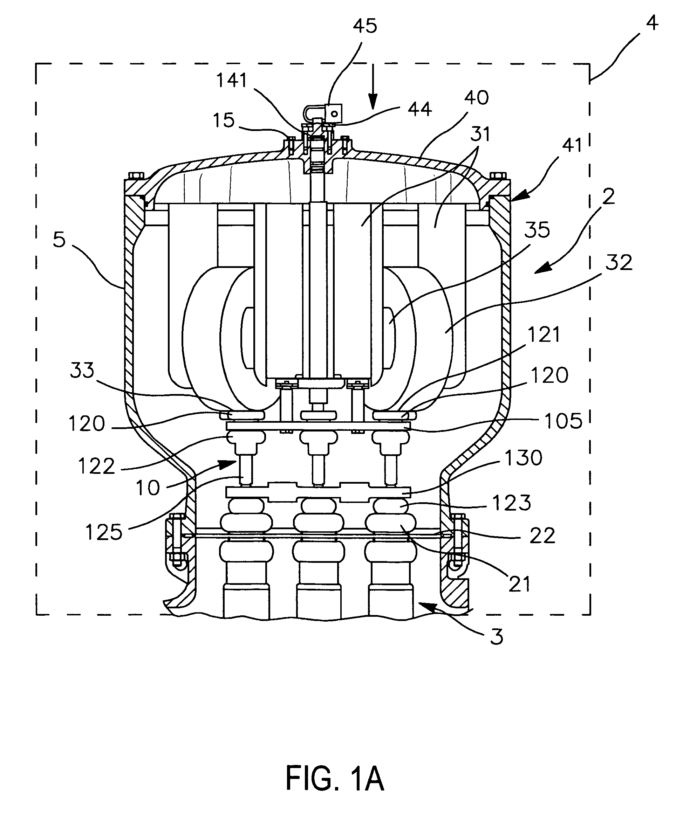

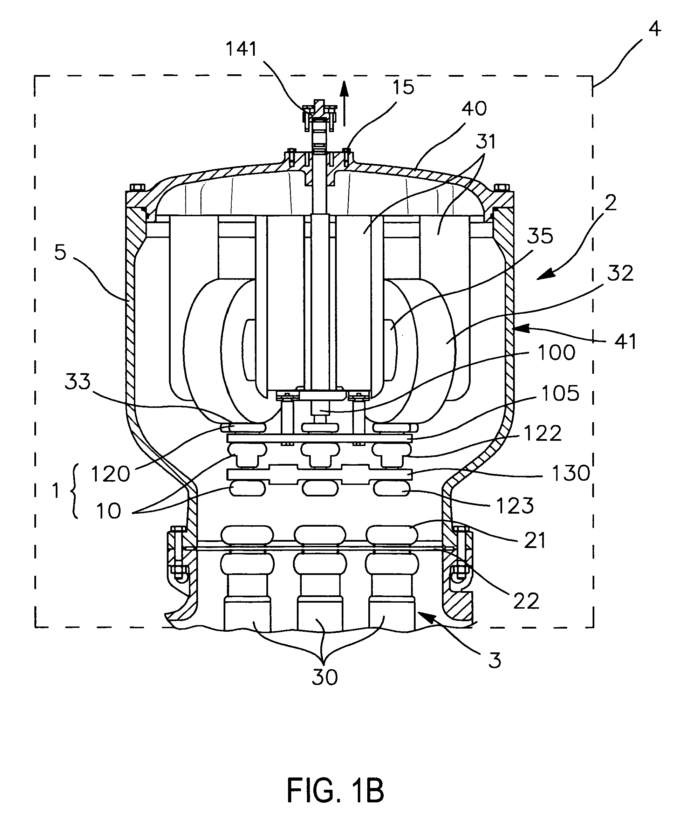

On va maintenant se référer aux figures 1A, 1B qui montrent un dispositif de sectionnement selon l'invention monté entre deux parties 2, 3 d'un circuit électrique 4 haute ou moyenne tension dont l'une est un transformateur de tension 2. Le circuit électrique 4 est un poste électrique haute ou moyenne tension à isolation gazeuse (GIS) ou un poste électrique sous enveloppe métallique (PSEM). Le poste électrique 4 est schématisé par des pointillés.

Le transformateur de tension 2 est placé dans une enceinte étanche 41. Cette enceinte étanche 41 est généralement emplie d'un gaz d'isolation tel que l'hexafluorure de soufre SF₆. Elle est délimitée par des parois latérales 5, un fond 22 et un couvercle 40. Le fond 22 de l'enceinte 41 est réalisé en un matériau diélectrique tel que de la résine époxyde ou d'un polyester thermoplastique par exemple. Les parois 5 et le couvercle 40 sont électriquement conducteurs.

L'autre partie 3 du circuit électrique est schématisée par un ou plusieurs conducteurs haute tension ou moyenne tension du poste électrique 4.

Le dispositif de sectionnement est destiné à mettre sous tension ou hors tension le transformateur de tension 2 pour le séparer électriquement ou non du reste du poste électrique 4. Des conducteurs 30 du poste pénètrent dans l'enceinte 41 en traversant son fond 22. Ils se terminent chacun par un élément de connexion fixe 21 placé dans l'enceinte 41.

Sur la figure 1A, le dispositif de sectionnement 1 est en position fermée et sur la figure 1B, il est en position ouverte. Le passage de la position fermée à la position ouverte et vice versa se fait lorsque le poste 4 est hors tension.

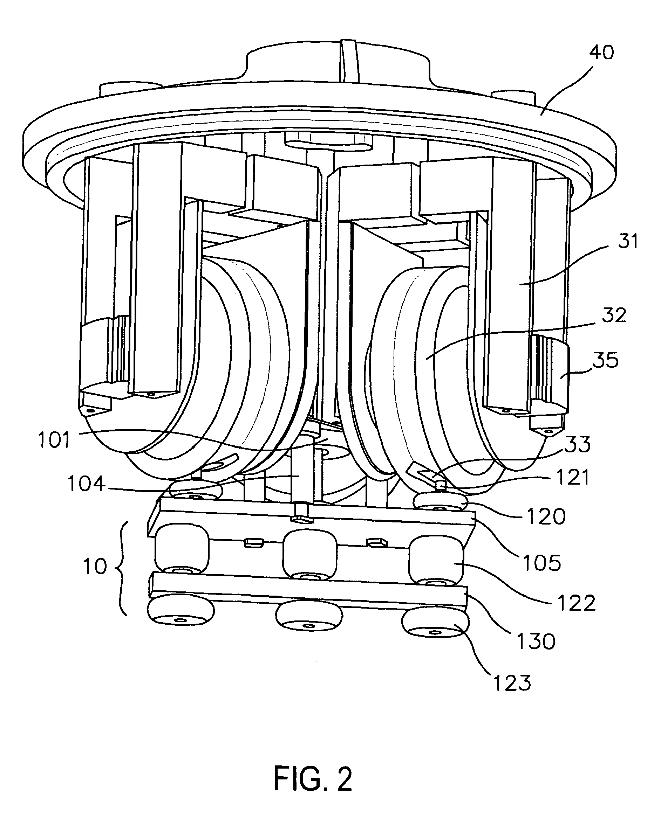

Sur ces figures, le transformateur de tension 2 est représenté triphasé mais il aurait très bien pu être monophasé. On peut également se référer à la figure 2 qui montre en trois dimensions l'assemblage entre le transformateur de tension 2 et le dispositif de sectionnement. Le transformateur de tension 2 possède trois jeux d'enroulements 32 disposés en triangle ou en étoile, enroulés chacun autour d'un noyau 35. Les trois jeux d'enroulements 32 sont maintenus en position les uns par rapport aux autres grâce à un support 31, appelé par la suite cadre support, sur lequel ils sont fixés.

Le dispositif de sectionnement 1 comporte au moins une paire de contacts électriques 123,121 dont un référencé 121 est fixe. Il est destiné à être maintenu en contact électrique contre un élément de connexion 33 relié à un enroulement 32 du transformateur de tension 2. L'élément de connexion électrique 33 du transformateur de tension 2 prend la forme d'une plaque conductrice. Elle est entourée par un pare-effluve 34.

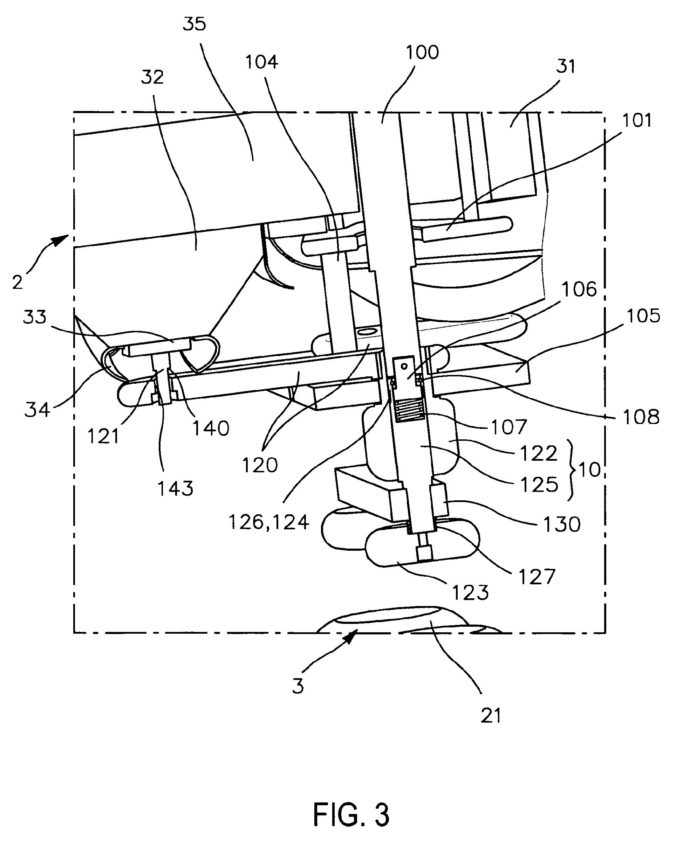

Le contact électrique fixe 121 est construit autour d'un axe. Le contact électrique fixe 121 du dispositif de sectionnement est maintenu de manière élastique pressé axialement contre la plaque conductrice 33 du transformateur 2, quelle que soit la position ouverte ou fermée du dispositif de sectionnement 1. Le détail du contact électrique fixe 121 est montré sur les figures 3, 4, 5A.

L'autre contact électrique 123 de la paire de contacts électriques du dispositif de sectionnement 1 est mobile. En position fermée du dispositif de sectionnement, il vient en contact électrique avec un élément de connexion électrique fixe 21 de l'autre partie du circuit électrique 3. En position ouverte, il en est éloigné.

Dans l'exemple, l'élément de connexion électrique fixe 21 est une borne terminale d'un conducteur auquel doit être relié le transformateur de tension 2, en fonctionnement.

Puisque le transformateur de tension 2 est représenté triphasé, le dispositif de sectionnement 1 comporte trois paires de contacts électriques. Dans le reste de la description, on va continuer à décrire un dispositif de sectionnement 1 avec plusieurs paires de contacts électriques.

Le dispositif de sectionnement 1 comporte également, coopérant avec chacun de ses contacts mobiles 123, un dispositif télescopique de guidage 10, électriquement conducteur possédant une partie fixe 122 et une partie mobile coulissante 125 par rapport à la partie fixe 122, la partie mobile coulissante 125 se terminant par le contact mobile 123. Dans l'exemple décrit, la partie mobile coulissante 125 prend la forme d'une tige coulissante et la partie fixe 122 d'un tube extérieur dans lequel coulisse la tige coulissante 125. D'autres formes auraient pu être adoptées que le couple tige-tube.

Sur les figures 5B, 5C les dispositifs télescopiques de guidage 10 sont représentés en éclaté avec sur la figure 5B leurs parties mobiles 125 et sur la figure 5C leurs parties fixes 122.

Dans l'exemple décrit, le dispositif de sectionnement 1 est triphasé, il possède donc trois dispositifs télescopiques de guidage 10. Les dispositifs télescopiques de guidage 10 sont agencés en ligne, l'un qui est qualifié de médian et les deux autres d'extrêmes. L'un des dispositifs télescopiques de guidage 10 coopère avec un dispositif de commande 100 du dispositif de sectionnement prenant la forme d'une tige de commande. C'est de préférence le dispositif télescopique de guidage 10 médian qui coopère avec la tige de commande 100. La tige de commande 100 est située dans le prolongement de la tige coulissante 125 du dispositif télescopique de guidage 10 médian. A l'opposé de la tige coulissante 125, la tige de commande 100 s'étend jusqu'à une ouverture du couvercle 40 de l'enceinte 41. En actionnant la tige de commande 100, on commande le passage de la position ouverte à la position fermée du dispositif de sectionnement 1 et vice versa. La tige de commande 100 est libre en translation lorsqu'elle n'est pas bloquée et elle est guidée radialement au niveau de sa fixation au dispositif télescopique de guidage 10 et du couvercle 40 comme on le verra ultérieurement.

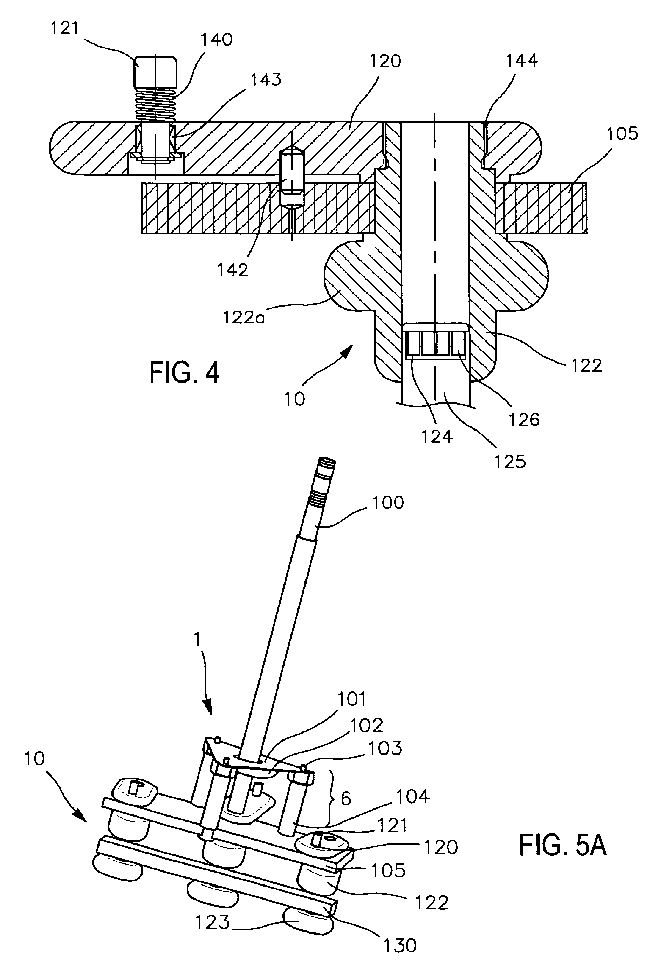

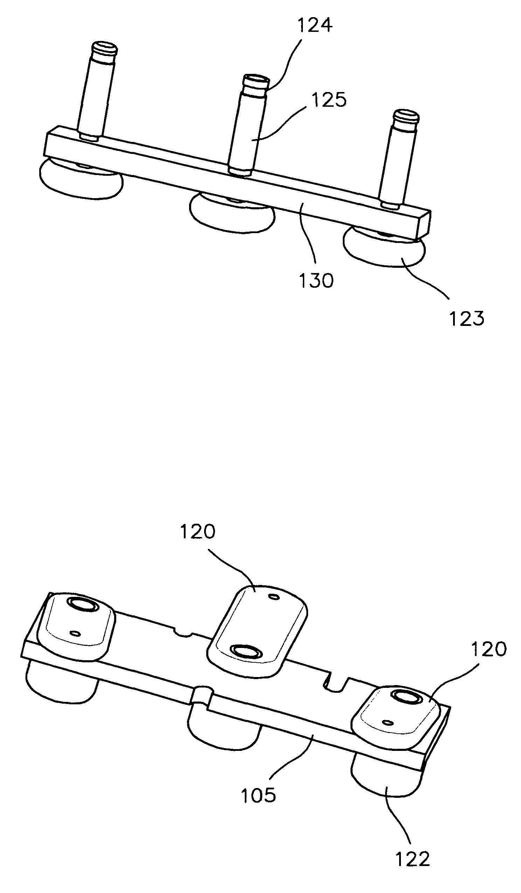

Les contacts électriques 123, 121 du dispositif de sectionnement 1 et les dispositifs télescopiques de guidage 10 forment un ensemble qui est fixé grâce à un dispositif de fixation 6 au transformateur 2. Dans l'exemple décrit, la fixation se fait au cadre support 31 du transformateur de tension 2 qui est monté sur le couvercle 40. On peut se référer aux figures 3 et 5A. Sur la figure 5A, le dispositif de sectionnement 1, objet de l'invention, est représenté préassemblé avant son montage sur le transformateur 2. La paire de contacts électriques 121, 123, le dispositif télescopique de guidage 10 et le dispositif de commande 100 forment un ensemble autoportant. Grâce à ce préassemblage, la fixation au transformateur 2 et donc au couvercle 40 et le montage dans l'enceinte 41 sont facilités par rapport aux dispositifs de sectionnement de l'art antérieur.

Le contact fixe 121 est construit autour d'un axe et est monté de manière élastique axialement. Lors de la fixation, le contact électrique fixe 121 vient en butée élastique contre l'élément de connexion électrique, de sorte qu'aucun ajustage longitudinal du contact électrique fixe 121 n'est requis après la fixation. L'élément de connexion électrique 33 a une surface suffisamment grande et sensiblement plane, orientée sensiblement perpendiculairement à la direction de fixation de l'ensemble autoportant. Ainsi aucun ajustement latéral n'est requis après la fixation.

Les dispositifs télescopiques de guidage 10, lorsqu'il y en a plusieurs, sont solidaires les uns des autres de manière à pouvoir être actionnés simultanément par la tige de commande 100, car la tige de commande 100 n'est couplée qu'à un seul d'entre eux : le dispositif télescopique de guidage 10 médian. Les parties fixes 122 des dispositifs télescopiques de guidage 10 sont montées sur un support commun fixe 105 diélectrique. Dans l'exemple décrit, les trois dispositifs télescopiques de guidage 10 sont sensiblement alignés et le support commun fixe 105 est sensiblement plan. Les parties mobiles 125 des dispositifs télescopiques de guidage 10 sont aussi fixées à un support commun mobile 130 diélectrique sensiblement plan. Elles sont également alignées. De cette façon, toutes les parties mobiles 125 se déplacent simultanément lors de l'actionnement de la tige de commande 100 et elles entraînent dans leur mouvement les contacts mobiles 123. Les parties mobiles coulissantes 125 se terminent chacune par un contact mobile 123 sensiblement en forme de chapeau de champignon avec une partie sommitale sensiblement plane. Chaque contact mobile 123 est monté de manière élastique dans une direction de déplacement du contact mobile, vis-à-vis de la partie mobile coulissante 125 avec laquelle il coopère. On a représenté pour cela un ressort de compression 127, placé autour de la partie mobile coulissante 125 en appui d'un côté sur le contact mobile 123 et de l'autre sur le support commun mobile 130. Grâce à la pression de contact aucun ajustement longitudinal n'est requis après la fixation.

Les éléments de connexion 21 de l'autre partie 3 du circuit électrique peuvent prendre une forme similaire en chapeau de champignon avec une partie sommitale sensiblement plane, les deux chapeaux de champignon se retrouvant face à face en contact lorsque le dispositif de sectionnement 1 est en position fermée. De telles formes améliorent la qualité diélectrique puisqu'elles évitent des concentrations du champ électrique. La qualité du contact peut être améliorée par un traitement de surface des contacts, par exemple, un argentage. De plus aucun ajustement latéral n'est requis après la fixation.

Les éléments de connexion 33 du transformateur de tension 2 ne sont pas en ligne, ils sont disposés en triangle sensiblement dans un plan. Les contacts fixes 121 du dispositif de sectionnement 1 sont également en triangle, le dispositif de sectionnement 1 assurant le passage triangle-droite. On va décrire comment ci-dessous.

Les contacts électriques 123, 121 d'une paire du dispositif de sectionnement 1 sont reliés électriquement entre eux. Cela se fait, en partant du contact mobile 123, via la partie mobile coulissante 125, la partie fixe 122 du dispositif télescopique de guidage 10 et une barrette de décalage conductrice 120 qui porte à une extrémité le contact fixe 121. Le contact fixe 121 peut coopérer avec un ressort de compression 140 et avec un contact annulaire glissant 143 se trouvant au niveau de la barrette de décalage 120 à la base du contact fixe 121. En variante ou en combinaison, la barrette de décalage 120 est suffisamment élastique pour assurer ou contribuer à assurer le contact élastique entre le contact fixe 121 et l'élément de connexion 33. Son matériau et sa forme sont choisis en conséquence.

De manière avantageuse, le dispositif de sectionnement 1 autoportant peut ainsi être fixé au cadre support 31 sans avoir à ajuster la distance les séparant. Les barrettes de décalage 120 sont fixées chacune à l'autre extrémité à une partie fixe 122 d'un dispositif télescopique de guidage 10, par vissage par exemple, et sont verrouillées en rotation par rapport au support commun fixe 105 à l'aide d'aiguilles de positionnement 142. On a représenté avec la référence 144 le filetage dans la barrette de décalage 120. Une continuité électrique est assurée depuis le contact mobile 123 jusqu'au contact fixe 121 en passant par la tige coulissante 125, le tube 122, la barrette de décalage 120. Une orientation angulaire appropriée des barrettes de décalage 120 par rapport au support commun fixe 105 permet d'obtenir l'agencement en triangle recherché des contacts fixes 121.

Le montage élastique des contacts mobile et/ou fixe 123, 121 du dispositif de sectionnement 10 permet de compenser des tolérances axiales entre les trois phases du transformateur 2 et de l'autre partie 2 du circuit électrique et de maintenir une pression de contact optimale dans chacune des phases.

Sur les figures 3 et 4, la partie fixe 122 d'un dispositif télescopique de guidage 10 est solidaire du support commun fixe 105 et de la barrette de décalage 120 associée. Le support commun fixe 105 est pris en sandwich entre une protubérance annulaire 122a de la partie fixe 122 et la barrette de décalage 120 associée à ce dispositif télescopique de guidage 10. Il est préférable de prévoir dans la paroi externe de la partie mobile coulissante 125 une rainure 124 dans laquelle est logée un élément élastique de connexion glissant protubérant 126 de manière à assurer un bon contact électrique entre la partie mobile coulissante 125 et la partie fixe 122 du dispositif télescopique de guidage 10. La rainure 124 est visible sur la figure 5B et le contact glissant protubérant 126 sur la figure 4.

Le dispositif de sectionnement 1 comprend en outre, comme on l'a déjà évoqué, un dispositif de fixation 6 au cadre support 31 du transformateur 2. Il n'y a pas de fixation à l'enceinte 41 depuis l'intérieur, ce qui était complexe à réaliser dans l'art antérieur. Cela facilite également le montage du dispositif de sectionnement 1 sur l'une des parties 2, 3 du circuit, il n'y a pas de problème d'accessibilité. Dans la demande de brevet FR-2 870 635, il fallait prévoir des pièces de guidage fixées à l'intérieur l'enceinte.

Le dispositif de fixation 6 est illustré notamment sur les figures 3 et 5A. Lorsque le dispositif de fixation 6 est fixé à la partie 2 de circuit, les contacts fixes 121 du dispositif de sectionnement 1 sont en contact électrique chacun avec un élément de connexion électrique 33 de la partie 2 de circuit. Dans l'exemple, la partie 2 du circuit électrique concernée est le transformateur de tension 4, la fixation se fait au niveau de son cadre support 31 qui lui même est monté sur le couvercle 40. Le dispositif de fixation 6 peut comprendre une plaque métallique 101 à fixer par des boulons métalliques 103 au cadre support 31 du transformateur de tension 2 et des piliers isolants 104 solidaires d'un côté de la plaque métallique 101 et de l'autre du support commun fixe 105 des dispositifs télescopiques de guidage 10. Les boulons métalliques 103 prolongent les piliers isolants 104. La plaque métallique 101 peut être doublée du côté des dispositifs télescopiques de guidage d'un écran de blindage 102. La forme de la plaque métallique 101 et celle de l'écran de blindage 102 sont conçues pour optimiser la distribution du champ électrique dans leur voisinage. Sur la figure 3 la plaque métallique 101 et l'écran de blindage sont confondus et ce dernier n'est pas visible. On a représenté trois piliers isolants 104 mais, on aurait pu en utiliser plus ou moins.

La partie mobile coulissante 125 du dispositif télescopique de guidage 10 médian est équipée à son extrémité opposée à celle qui porte le contact mobile 123 d'une pièce de raccordement rétractable 106 déplaçable en translation. Cette pièce de raccordement rétractable 106 prend appui d'un côté sur un ressort de compression 107 placé dans un logement dont est dotée la tige coulissante 125. La pièce de raccordement 106 est fixée de l'autre côté à la tige de commande 100. Lorsqu'elle est poussée par la tige de commande 100, elle appuie par l'intermédiaire du ressort 107 sur la pièce mobile coulissante 125 du dispositif télescopique de guidage 10 médian et la déplace ainsi que le contact mobile 123 pour qu'il vienne buter sur l'élément de connexion fixe 21 correspondant de l'autre partie 3 du circuit. Pour générer une force de contact suffisante indépendante des tolérances de longueur, on comprime le ressort 107. Le dispositif télescopique de guidage médian 10 est alors en extension. Avec la solidarisation des dispositifs télescopiques de guidage extrêmes au dispositif télescopique de guidage médian par le support mobile commun 130 tous les contacts mobiles 123 se déplacent sensiblement en synchronisme. L'actionnement de la tige de commande 100 (matérialisé par la flèche sur la figure 1A), en la poussant dans l'enceinte 41, se fait par un opérateur. Il la bloque lorsqu'elle est arrivée en bout de course à l'aide d'une pièce de blocage 141 par exemple en forme de cloche qu'il fixe dans le couvercle 40 par des vis 15 par exemple. Les contacts mobiles 123 sont alors en butée et le ressort de compression 107 est comprimé. Le dispositif de sectionnement 1 est alors en position fermée. L'opérateur peut verrouiller la tige de commande 100 dans cette position à l'aide d'un cadenas 45 pour que le dispositif de sectionnement 1 ne puisse pas être mis en position ouverte de manière inopportune. Le sommet de la pièce de blocage 141 en forme de cloche passe à travers une plaque de verrouillage 44.

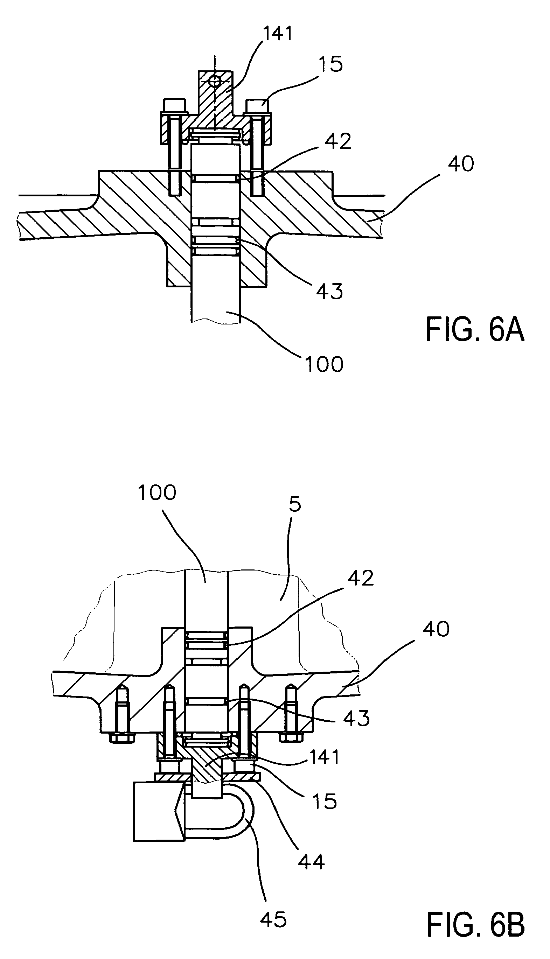

On se réfère aux figures 6A, 6B.

A l'inverse lorsque la tige de commande 100 est débloquée, elle se déplace en émergeant de l'enceinte étanche 41 (flèche sur la figure 1B), sans l'apport d'une force externe, grâce à la pression du gaz dont est emplie l'enceinte 41. La pièce de raccordement rétractable 106 s'arrête sur un anneau élastique 108, placé dans une rainure dans l'alésage de la partie mobile 125, cela évite son déplacement lorsque le ressort 107 se décomprime.

En conclusion, en position fermée du dispositif de sectionnement 1 (figure 1A), ses contacts fixes 121 sont en contact électrique avec les éléments de connexion 33 du transformateur de tension 2 et ses contacts mobiles 123 sont en contact électrique avec les éléments de connexion fixes 21 de l'autre partie du circuit 3. La tige de commande 100 est maintenue verrouillée par rapport au couvercle 40 grâce à la pièce de blocage 141. Les dispositifs télescopiques de guidage 10 sont en extension.

En position ouverte du dispositif de sectionnement 1 (figure 1B), la pièce mobile coulissante 125 de chaque dispositif télescopique de guidage 10 est rétractée à l'intérieur de la partie fixe 122, les contacts mobiles 123 sont à distance des éléments de connexion fixes 21 et la tige de commande 100 est remontée et elle émerge du couvercle 40, la pièce de blocage 141 en forme de cloche est désolidarisée du couvercle comme illustré sur la figure 1B.

Pour assurer l'étanchéité de l'enceinte 41, la tige de commande 100 est équipée au niveau de son passage au travers du couvercle 40 d'un ou plusieurs joints 42, 43. Sur les figures 6A et 6B, on a représenté trois joints dont deux 43 forment une paire, ce sont les plus proches de l'intérieur de l'enceinte 41. Leur fonction est d'assurer l'étanchéité de l'intérieur de l'enceinte 41 vis-à-vis de l'extérieur. Le dernier joint 42, qui est le plus proche de l'extérieur de l'enceinte a pour fonction d'éviter que de la poussière ne pénètre dans l'enceinte. Il est accessible de l'extérieur de l'enceinte 41 lorsque le dispositif de sectionnement est en position ouverte, il peut alors être aisément changé si nécessaire.

Bien qu'un mode de réalisation de la présente invention ait été représenté et décrit de façon détaillée, on comprendra que différents changements et modifications selon les revendications 1-20 puissent être apportés.

## Revendications

1. Dispositif de sectionnement pour séparer ou connecter deux parties d'un circuit électrique parmi lesquelles un transformateur de tension comportant des enroulements (32), le dispositif de sectionnement étant apte à prendre une position ouverte ou une position fermée et comportant au moins une paire de contacts électriques (123, 121) avec un contact mobile (123) et un contact fixe (121) devant être relié électriquement avec un enroulement (32) du transformateur via un élément de connexion (33) du transformateur quelle que soit la position du dispositif de sectionnement, **caractérisé en ce qu'**il comporte :
un dispositif télescopique de guidage (10) par paire de contacts électriques (123, 121), ayant une partie fixe (122) solidaire du contact électrique fixe (121) et une partie mobile coulissante (125) par rapport à la partie fixe (122) et portant le contact mobile (123), les contacts électriques (121, 123) de la paire étant reliés électriquement entre eux via le dispositif télescopique de guidage (10),
un dispositif de commande pour maintenir le dispositif télescopique de guidage (10) en extension afin que le contact mobile (123) vienne en contact électrique avec un élément de connexion électrique (21) de l'autre partie du circuit (3) en position fermée et pour que le dispositif télescopique de guidage (10) soit rétracté, interrompant le contact entre le contact mobile (123) et l'élément de connexion électrique (21) en position ouverte,
la paire de contacts électriques (121, 123), le dispositif télescopique de guidage (10) et le dispositif de commande formant un ensemble autoportant, et **en ce qu'**il comporte en outre un dispositif de fixation (6) pour fixer l'ensemble au transformateur, le contact fixe (121), construit autour d'un axe, étant monté de manière élastique axialement de sorte à venir en butée élastique contre l'élément de connexion (33) du transformateur (2) après la fixation.

2. Dispositif de sectionnement selon la revendication 1, dans lequel le dispositif de fixation (6) est solidaire de la partie fixe (122) du dispositif télescopique de guidage (10).

3. Dispositif de sectionnement selon l'une des revendications 1 ou 2, dans lequel lorsqu'il y a plusieurs dispositifs télescopiques de guidage (10), leurs parties fixes (122) sont montées sur un support fixe commun (105) diélectrique.

4. Dispositif de sectionnement selon la revendication 3, dans lequel le dispositif de fixation (6) prend appui sur le support fixe commun (105).

5. Dispositif de sectionnement selon l'une des revendications 3 ou 4, dans lequel leurs parties mobiles coulissantes (125) sont solidaires d'un support mobile commun (130) diélectrique.

6. Dispositif de sectionnement selon l'une des revendications précédentes, dans lequel le contact mobile (123) est monté de manière élastique dans une direction de déplacement du contact mobile.

7. Dispositif de sectionnement selon l'une des revendications précédentes, dans lequel le contact fixe (121) est monté à une extrémité d'une barrette de décalage (120) électriquement conductrice, l'autre extrémité de la barrette de décalage (120) conductrice étant fixée à la partie fixe (122) du dispositif télescopique de guidage (10).

8. Dispositif de sectionnement selon la revendication 7, dans lequel la barrette de décalage (120) est suffisamment élastique pour assurer ou contribuer à assurer le montage élastique.

9. Dispositif de sectionnement selon l'une des revendications précédentes, dans lequel le contact fixe (121) est équipé d'un ressort de compression (140).

10. Dispositif de sectionnement selon l'une des revendications 7 à 9, dans lequel la barrette de décalage (120) est bloquée en rotation par rapport à la partie fixe (122) du dispositif télescopique de guidage (10).

11. Dispositif de sectionnement selon l'une des revendications précédentes, dans lequel le dispositif de commande (100) est couplé à un seul dispositif télescopique de guidage (10) même lorsqu'il y a plusieurs dispositifs télescopiques de guidage.

12. Dispositif de sectionnement selon la revendication 11, dans lequel le dispositif de commande (100) est une tige de commande ayant une extrémité reliée de manière élastique à la partie mobile coulissante (125) du dispositif télescopique de guidage (10) auquel il est couplé.

13. Dispositif de sectionnement selon la revendication 12, dans lequel la tige de commande (100) est équipée à son autre extrémité d'une pièce de blocage (141) pour la bloquer en translation par rapport une enceinte dans laquelle le transformateur est logé, lorsque le dispositif de sectionnement est en position fermée, la pièce de blocage (141) étant inopérante et la tige de commande (100) étant débloquée en translation lorsque le dispositif de sectionnement est en position ouverte.

14. Dispositif de sectionnement selon la revendication 12, dans lequel la tige de commande (100), passe à travers le transformateur (2) jusqu'à un couvercle (40) de l'enceinte (41) et est accessible de l'extérieur de l'enceinte (41) lorsque le dispositif de sectionnement est fixé au transformateur (2) logé dans l'enceinte (41).

15. Dispositif de sectionnement selon l'une des revendications précédentes, comportant trois paires de contacts électriques (121, 123).

16. Dispositif de sectionnement selon l'une des revendications précédentes, dans lequel le contact électrique mobile (123) est configuré en chapeau de champignon avec une partie sommitale sensiblement plane, cette partie sommitale sensiblement plane étant sensiblement perpendiculaire à une direction de déplacement du contact électrique mobile (123).

17. Transformateur de tension équipé d'un dispositif de sectionnement selon l'une des revendications précédentes, dans lequel les enroulements (32) sont montés sur un support (31), le dispositif de fixation (6) étant fixé sur le support (31).

18. Transformateur selon la revendication 17, dans lequel l'élément de connexion (33) a une surface sensiblement plane orientée sensiblement perpendiculairement à l'axe du contact fixe (121).

19. Poste électrique à isolation gazeuse ou à enveloppe métallique comportant un transformateur (2) de tension et au moins un dispositif de sectionnement selon l'une des revendications 1 à 16, dans lequel l'autre partie du circuit est une partie autre (3) du poste électrique.

20. Poste électrique à isolation gazeuse selon la revendication 19, dans lequel l'élément de connexion électrique (21) de l'autre partie du circuit (3) est configuré en chapeau de champignon avec une partie sommitale sensiblement plane, cette partie sensiblement plane étant sensiblement perpendiculaire à une direction de déplacement du contact électrique mobile (123) du dispositif de sectionnement.

## Patentansprüche

1. Trennvorrichtung zum Trennen oder Verbinden von zwei Teilen einer elektrischen Schaltung, zu denen ein Spannungstransformator gehört, der Wicklungen (32) umfasst, wobei die Trennvorrichtung geeignet ist, um eine offene Position oder eine geschlossene Position einzunehmen und mindestens ein Paar elektrische Kontakte (123, 121) mit einem beweglichen Kontakt (123) und einem feststehenden Kontakt (121), der elektrisch mit einer Wicklung (32) des Transformators über ein Anschlusselement (33) des Transformators unabhängig von der Position der Trennvorrichtung zu verbinden ist, umfasst, **dadurch gekennzeichnet, dass** sie Folgendes umfasst:
- eine teleskopische Führungsvorrichtung (10) pro Paar elektrische Kontakte (123, 121), die einen feststehenden Teil (122), der mit dem feststehenden elektrischen Kontakt (121) fest verbunden ist, und einen beweglichen Teil (125), der im Verhältnis zu dem feststehenden Teil (122) gleitend ist und den beweglichen Kontakt (123) trägt, aufweist, wobei die elektrischen Kontakte (121, 123) des Paars über die teleskopische Führungsvorrichtung (10) elektrisch miteinander verbunden sind,
- eine Steuervorrichtung, um die teleskopische Führungsvorrichtung (10) ausgezogen zu halten, damit der bewegliche Kontakt (123) in elektrischen Kontakt mit einem elektrischen Anschlusselement (21) des anderen Teils der Schaltung (3) in der geschlossenen Position kommt, und damit die teleskopische Führungsvorrichtung (10) zurückgezogen wird, wobei sie den Kontakt zwischen dem beweglichen Kontakt (123) und dem elektrischen Anschlusselement (21) in der offenen Position unterbricht,
- das Paar elektrische Kontakte (121, 123), die teleskopische Führungsvorrichtung (10) und die Steuervorrichtung, die eine selbsttragende Einheit bilden,
und dass sie ferner eine Befestigungsvorrichtung (6) umfasst, um die Einheit an dem Transformator zu befestigen, wobei der feststehende Kontakt (121), der um eine Achse herum aufgebaut ist, axial elastisch angebracht ist, so dass er an dem Anschlusselement (33) des Transformators (2) nach der Befestigung elastisch zum Anschlag kommt.

2. Trennvorrichtung nach Anspruch 1, wobei die Befestigungsvorrichtung (6) mit dem feststehenden Teil (122) der teleskopischen Führungsvorrichtung (10) fest verbunden ist.

3. Trennvorrichtung nach einem der Ansprüche 1 oder 2, wobei, wenn es mehrere teleskopische Führungsvorrichtungen (10) gibt, ihre feststehenden Teile (122) an einer gemeinsamen dielektrischen feststehenden Auflage (105) angebracht sind.

4. Trennvorrichtung nach Anspruch 3, wobei sich die Befestigungsvorrichtung (6) an der gemeinsamen feststehenden Auflage (105) abstützt.

5. Trennvorrichtung nach einem der Ansprüche 3 oder 4, wobei ihre gleitenden beweglichen Teile (125) mit einer gemeinsamen dielektrischen beweglichen Auflage (130) fest verbunden sind.

6. Trennvorrichtung nach einem der vorhergehenden Ansprüche, wobei der bewegliche Kontakt (123) in einer Verschiebungsrichtung des beweglichen Kontakts elastisch angebracht ist.

7. Trennvorrichtung nach einem der vorhergehenden Ansprüche, wobei der feststehende Kontakt (121) an einem Ende einer elektrisch leitenden Versatzleiste (120) angebracht ist, wobei das andere Ende der leitenden Versatzleiste (120) an dem feststehenden Teil (122) der teleskopischen Führungsvorrichtung (10) angebracht ist.

8. Trennvorrichtung nach Anspruch 7, wobei die Versatzleiste (120) elastisch genug ist, um die elastische Anbringung sicherzustellen oder zu ihrer Sicherstellung beizutragen.

9. Trennvorrichtung nach einem der vorhergehenden Ansprüche, wobei der feststehende Kontakt (121) mit einer Druckfeder (140) ausgestattet ist.

10. Trennvorrichtung nach einem der Ansprüche 7 bis 9, wobei die Versatzleiste (120) drehmäßig im Verhältnis zu dem feststehenden Teil (122) der teleskopischen Führungsvorrichtung (10) rotationsgesichert ist.

11. Trennvorrichtung nach einem der vorhergehenden Ansprüche, wobei die Steuervorrichtung (100) mit einer einzigen teleskopischen Führungsvorrichtung (10) gekoppelt ist, auch wenn es mehrere teleskopische Führungsvorrichtungen gibt.

12. Trennvorrichtung nach Anspruch 11, wobei die Steuervorrichtung (100) eine Steuerstange ist, die ein Ende aufweist, das elastisch mit dem gleitenden beweglichen Teil (125) der teleskopischen Führungsvorrichtung (10) verbunden ist, mit der sie gekoppelt ist.

13. Trennvorrichtung nach Anspruch 12, wobei die Steuerstange (100) an ihrem anderen Ende mit einem Blockierungsstück (141) ausgestattet ist, um sie translationsmäßig im Verhältnis zu einer Einfassung zu blockieren, in welcher der Transformator untergebracht ist, wenn sich die Trennvorrichtung in der geschlossenen Position befindet, wobei das Blockierungsstück (141) unwirksam ist und die Steuerstange (100) translationsmäßig freigegeben ist, wenn sich die Trennvorrichtung in der offenen Position befindet.

14. Trennvorrichtung nach Anspruch 12, wobei die Steuerstange (100) durch den Transformator (2) hindurch bis zu einem Deckel (40) der Einfassung (41) geht und von außerhalb der Einfassung (41) zugänglich ist, wenn die Trennvorrichtung, die an dem Transformator (2) befestigt ist, der in der Einfassung (41) untergebracht ist.

15. Trennvorrichtung nach einem der vorhergehenden Ansprüche, umfassend drei Paare von elektrischen Kontakten (121, 123).

16. Trennvorrichtung nach einem der vorhergehenden Ansprüche, wobei der bewegliche elektrische Kontakt (123) pilzkopfförmig mit einem im Wesentlichen ebenen Scheitelteil konfiguriert ist, wobei dieser im Wesentlichen ebene Scheitelteil im Wesentlichen rechtwinklig zu einer Verschiebungsrichtung des beweglichen elektrischen Kontakts (123) ist.

17. Spannungstransformateur, der mit einer Trennvorrichtung nach einem der vorhergehenden Ansprüche ausgestattet ist, wobei die Wicklungen (32) an einer Auflage (31) angebracht sind, wobei die Befestigungsvorrichtung (6) an der Auflage (31) befestigt ist.

18. Transformateur nach Anspruch 17, wobei das Anschlusselement (33) eine im Wesentlichen ebene Oberfläche aufweist, die im Wesentlichen rechtwinklig zur Achse des feststehenden Kontakts (121) orientiert ist.

19. Gasisoliertes oder metallumhülltes elektrisches Stellwerk, umfassend einen Spannungstransformator (2) und mindestens eine Trennvorrichtung nach einem der Ansprüche 1 bis 16, wobei der andere Teil der Schaltung ein anderer Teil (3) des elektrischen Stellwerks ist.

20. Gasisoliertes elektrisches Stellwerk nach Anspruch 19, wobei das elektrische Anschlusselement (21) des anderen Teils der Schaltung (3) pilzkopfförmig mit einem im Wesentlichen ebenen Scheitelteil konfiguriert ist, wobei dieser im Wesentlichen ebene Scheitelteil im Wesentlichen rechtwinklig zu einer Verschiebungsrichtung des beweglichen elektrischen Kontakts (123) der Trennvorrichtung ist.

## Claims

1. Disconnector apparatus for separating or connecting two parts of an electrical circuit that include a voltage transformer having windings (32), the disconnector apparatus being adapted to assume an open position or a closed position, and having at least one pair of electrical contacts (123, 121), with a moving contact (123) and a fixed contact (121) intended to be electrically connected with a winding (32) of the transformer, via a connection element (33) of the transformer, whatever the position of the disconnector apparatus;
**characterized in that** it includes:
· one telescopic guide device (10) for each pair of electrical contacts (123, 121), the guide device having a fixed part (122), which is fixed relative to said fixed contact (121), and a mobile part (125) for sliding relative to said fixed part (122), the sliding part carrying the moving contact (123), the electrical contacts (121, 123) of said pair being connected electrically together via the telescopic guide device (10); and
· a control means for maintaining the telescopic guide device (10) extended so that in said closed position, the moving contact (123) is in electrical contact with an electrical connection element (21) of the other part (3) of the circuit, while in said open position, the telescopic guide device (10) is retracted so as to interrupt the contact between the moving electrical contact (123) and said connection element (21);
· the pair of electrical contacts (121, 123), the telescopic guide device (10), and the control means together constituting a self-contained sub-assembly; and
**in that** the disconnector apparatus further includes a fastening device (6) for fastening said sub-assembly to the transformer;
· the fixed contact (121), which is constructed around an axis, being mounted axially elastic so that the fixed contact makes elastic engagement against the connection element (33) of the transformer after said fastening has been made.

2. Disconnector apparatus according to claim 1, wherein said fastening device (6) is fixed relative to the fixed part (122) of the telescopic guide device (10).

3. Disconnector apparatus according to claim 1 or claim 2, having a plurality of telescopic guide devices (10), the fixed parts (122) of which are mounted on a common fixed dielectric support (105).

4. Disconnector apparatus according to claim 3, wherein the fastening device (6) bears on the common fixed support (105).

5. Disconnector apparatus according to claim 3 or claim 4, wherein the movable sliding parts (125) of the guide devices are fixed to a common movable dielectric support (130).

6. Disconnector apparatus according to any preceding claim, wherein the moving contact (123) is mounted elastically for movement thereof in a direction of movement of said moving contact.

7. Disconnector apparatus according to any preceding claim, wherein the fixed contact (121) is mounted at one end of a conductive offset bar (120), the other end of the conductive offset bar (120) being fixed to the fixed part (122) of the telescopic guide device (10).

8. Disconnector apparatus according to claim 7, wherein the offset bar (120) has sufficient elasticity to ensure, or to contribute to ensuring, the elastic mounting.

9. Disconnector apparatus according to any preceding claim, wherein the fixed contact (21) is equipped with a compression spring (140).

10. Disconnector apparatus according to any one of claims 7 to 9, wherein the offset bar (120) is prevented from rotating relative to the fixed part (122) of the telescopic guide device (10).

11. Disconnector apparatus according to any preceding claim, wherein the control device (100) is coupled to only one telescopic guide device (10) even when the apparatus has a plurality of telescopic guide devices.

12. Disconnector apparatus according to claim 11, wherein said control means (100) is a control rod having one of its ends coupled elastically to said movable sliding part (125) of the telescopic guide device (10) to which it is coupled.

13. Disconnector apparatus according to claim 12, wherein the control rod (100) is equipped at its other end with a stop member (141) arranged so that, when the disconnector apparatus is in its closed position, the stop member prevents translation movement of the control rod relative to a chamber that contains the transformer, the stop member (141) being inoperative and the control rod (100) being released for translation movement when the disconnector apparatus is in its open position.

14. Disconnector apparatus according to claim 12, wherein the control rod (100) extends through the transformer (2) to a cover plate (40) of the chamber (41) and is accessible from outside the chamber (41) when the disconnector apparatus is fixed to the transformer (2) contained in the chamber (41).

15. Disconnector apparatus according to any preceding claim, having three pairs of electrical contacts (121, 123).

16. Disconnector apparatus according to any preceding claim, wherein the moving electrical contact (123) is configured like a mushroom cap with a substantially flat summit portion, the substantially flat summit portion being substantially perpendicular to a direction of movement of the moving electrical contact (123).

17. A voltage transformer equipped with a disconnector apparatus according to any preceding claim, wherein the windings (32) of the transformer are mounted on a transformer support (31), said fastening device (6) being fixed on said support (31).

18. A transformer according to claim 17, wherein said connection element (33) has a substantially flat surface oriented substantially at a right angle to the axes of the fixed electrical contact (121).

19. A gas-insulated or metalclad substation comprising a voltage transformer (2) and at least one disconnector apparatus according to any one of claims 1 to 16, wherein the other part of the circuit is another part (3) of the substation.

20. A gas-insulated or metalclad substation according to claim 19, wherein the electrical connection element (21) of said other part (3) of the circuit is configured like a mushroom cap with a substantially flat summit portion, the substantially flat summit portion being substantially perpendicular to a direction of movement of the moving electrical contact (123) of the disconnector apparatus.
